# EUROPÄISCHE PATENTANMELDUNG

(11) **EP 3 029 330 A1**
(43) Veröffentlichungstag der Anmeldung: **08.06.2016**
(21) Anmeldenummer: 15197807.9
(22) Anmeldetag: 10.06.2014
(51) Int. Cl.: F04D 27/00, F25B 49/02, F25B 13/00

(54) **VERFAHREN ZUM STEUERN EINER LÜFTEREINRICHTUNG EINES VERFLÜSSIGERS EINES WÄRMEPUMPENKREISLAUFS**

(30) Priorität: 16.07.2013 DE 102013213916
(62) Teilanmeldung aus: 14171773.6
(71) Anmelder: Robert Bosch GmbH, 70442 Stuttgart (DE)
(72) Erfinder: Eklund, Gunnar, 57392 Tranas (SE); Gustafsson, Kjell, 58336 Linkoeping (SE); Akerstedt, Andreas, 57338 Tranas (SE)

(57) **Zusammenfassung**

Die Erfindung betrifft ein Verfahren zum Steuern einer Lüftereinrichtung (70) eines Kondensators (65) eines Wärmepumpenkreislaufs (10;300;400) sowie einen Wärmepumpenkreislauf mit einem Kompressor (15), einer Steuereinrichtung (105) und einem Kondensator (65), wobei der Kompressor ein erstes Medium (110) in den Kondensator pumpt, wobei eine Lüftereinrichtung (70) vorgesehen ist, die ausgebildet ist, ein zweites Medium (115) für den Kondensator zu fördern, wobei ein Temperatursensor (216) vorgesehen ist, wobei der Temperatursensor eine Temperatur des ersten Mediums zwischen dem Kondensator und dem Kompressor misst, wobei die Steuereinrichtung eine Förderleistung der Lüftereinrichtung in Abhängigkeit der gemessenen Temperatur steuert.

## Beschreibung

Die Erfindung betrifft ein Verfahren zum Steuern einer Lüftereinrichtung eines Verdampfers eines Wärmepumpenkreislaufs gemäß Patentanspruch und einen Wärmepumpenkreislauf gemäß Patentanspruch 5.

### Stand der Technik

Es sind Wärmepumpenkreisläufe bekannt, die einen Kompressor und einen Verdampfer aufweisen. Der Verdampfer ist fluidisch über ein erstes Medium mit dem Kompressor verbunden. An dem Verdampfer ist ein Lüfter vorgesehen, der ausgebildet ist, ein zweites Medium an den Verdampfer zu fördern, um einen Wärmeaustausch an dem Verdampfer zwischen dem ersten Medium und dem zweiten Medium zu erreichen. Der Lüfter dient dazu, den Wärmeaustausch zwischen den beiden Medien zu forcieren. Dabei kann der Lüfter, insbesondere eine Drehzahl der Lüftereinrichtung, in Abhängigkeit der Temperatur des zweiten Mediums angesteuert werden. Aufgrund des breiten Temperaturspektrums des zweiten Mediums, das beispielsweise die Umgebungsluft sein kann, kann das Betriebsverhalten in bestimmten Temperaturbereichen negativ beeinflusst bei dieser Steuerungsmethode sein.

### Offenbarung der Erfindung

Es ist Aufgabe der Erfindung, ein verbessertes Verfahren zum Steuern einer Lüftereinrichtung eines Wärmetauschers eines Wärmepumpenkreislaufs bereitzustellen. Ferner besteht die Aufgabe der Erfindung darin, einen verbesserten Wärmepumpenkreislauf bereitzustellen.

Die Aufgabe der Erfindung wird gemäß Patentanspruch 1 gelöst. Vorteilhafte Ausführungsformen sind in den abhängigen Ansprüchen angegeben.

Erfindungsgemäß wurde erkannt, dass ein verbessertes Verfahren zur Steuerung einer Lüftereinrichtung eines Kondensators eines Wärmepumpenkreislaufs, aufweisend einen Kompressor, der ein erstes Medium zu dem Kondensator pumpt, und die Lüftereinrichtung, die ein zweites Medium zur Umströmung des Kondensators fördert, dadurch bereitgestellt werden kann, dass eine Temperatur des ersten Mediums ausgangsseitig des Kompressors zwischen Kompressor und Kondensator gemessen wird, wobei eine Förderleistung der Lüftereinrichtung in Abhängigkeit der Temperatur des ersten Mediums gesteuert wird. Auf diese Weise wird sichergestellt, dass eine hinreichend große Masse des zweiten Mediums dem Kondensator zugeführt wird, um zwischen dem Verdampfer und dem zweiten Medium einen hinreichend großen Wärmeaustausch stattfinden zu lassen, um einen sicheren Betrieb des Wärmepumpenkreislaufs sicherzustellen. Ferner wird ein Druck des ersten Mediums in dem Kondensator überwacht, wobei der erfasste Druck mit einem vordefinierten Schwellenwert verglichen wird, wobei bei Überschreiten des erfassten Drucks im Kondensator die Lüftereinrichtung aktiviert wird. Auf diese Weise wird sichergestellt, dass das erste Medium den Verdampfer gasförmig verlässt.

Die Aufgabe wird aber auch durch einen Wärmepumpenkreislauf gemäß Patentanspruch 5 gelöst. Vorteilhafte Ausführungsformen sind in den abhängigen Ansprüchen angegeben.

Erfindungsgemäß wurde erkannt, dass ein verbesserter Wärmepumpenkreislauf dadurch bereitgestellt werden kann, dass der Wärmepumpenkreislauf einen Kompressor, eine Steuereinrichtung und einen Kondensator umfasst, wobei der Kompressor ein erstes Medium in den Kondensator pumpt, wobei eine Lüftereinrichtung vorgesehen ist, die ausgebildet ist, ein zweites Medium für den Kondensator zu fördern. Ferner ist ein Temperatursensor vorgesehen, wobei der Temperatursensor eine Temperatur des ersten Mediums zwischen dem Kondensator und dem Kompressor misst, wobei die Steuereinrichtung eine Förderleistung der Lüftereinrichtung in Abhängigkeit der gemessenen Temperatur steuert, wobei die Steuereinrichtung einen Druck des ersten Mediums in dem Kondensator überwacht, wobei die Steuereinrichtung den erfasste Druck mit einem vordefinierten Schwellenwert vergleicht, wobei die Steuereinrichtung bei Überschreiten des vordefinieren Schwellenwerts durch den erfassten Drucks im Kondensator die Lüftereinrichtung aktiviert.

Auf diese Weise kann insbesondere im Kühlbetrieb ein zuverlässiges Betriebsverhalten des Wärmepumpenkreislaufs gewährleistet werden.

Besonders vorteilhaft ist, wenn das zweite Medium Luft ist.

In einer weiteren Ausführungsform umfasst die Lüftereinrichtung einen Antriebsmotor und einen Lüfterrotor, der mit dem Antriebsmotor gekoppelt ist, wobei die Förderleitung der Lüftereinrichtung über eine Drehzahl des Antriebsmotors gesteuert wird. Dadurch kann die Förderleistung besonders einfach gesteuert werden.

Nachfolgend wird die Erfindung anhand von Figuren näher erläutert. Dabei zeigen:
- Fig. 1: eine schematische Darstellung eines Wärmepumpenkreislaufs gemäß einer ersten Ausführungsform;
- Fig. 2: ein Diagramm für einen Temperaturverlauf;
- Fig. 3: eine schematische Darstellung eines Wärmepumpenkreislaufs gemäß einer zweiten Ausführungsform; und
- Fig. 4: eine schematische Darstellung eines Wärmepumpenkreislaufs gemäß einer dritten Ausführungsform.

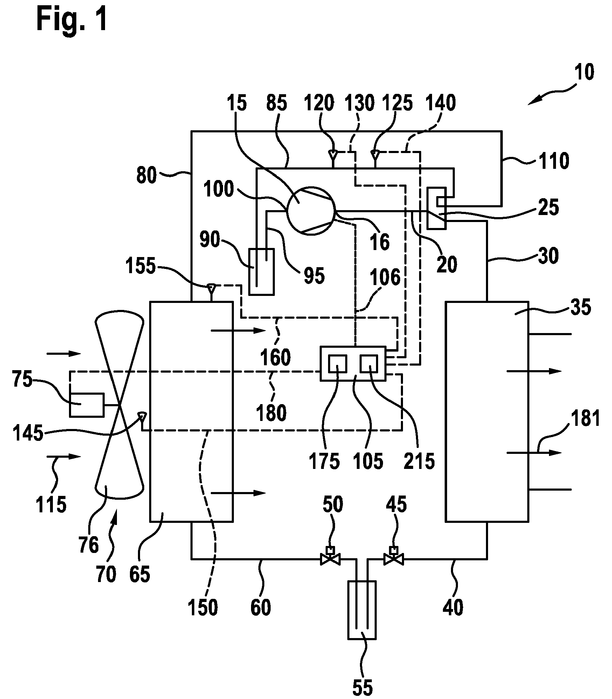

Figur 1 zeigt eine schematische Darstellung eines Wärmepumpenkreislaufs 10. Der Wärmepumpenkreislauf 10 umfasst einen Kompressor 15. Der Kompressor 15 ist an einer Ausgangsseite 16 über eine erste Leitung 20 mit einem 2/4 Wegeventil 25 verbunden. Das 2/4 Wegeventil 25 befindet sich dabei in einem ersten Schaltzustand. Dabei wird bei dem 2/4 Wegeventil die erste Leitung 20 mit einer zweiten Leitung 30 verbunden. Die zweite Leitung 30 verbindet das 2/4 Wegeventil mit einem ersten Wärmetauscher 35. Der erste Wärmetauscher 35 ist seinerseits mit einer dritten Leitung 40 verbunden. Die dritte Leitung 40 verbindet den ersten Wärmetauscher 35 mit einer ersten Drossel 45. Zwischen der ersten Drossel 45 und einer zweiten Drossel 50 ist ein Gas-Flüssigkeitsbehälter 55 angeordnet. Die zweite Drossel 50 ist über eine vierte Leitung 60 mit einem zweiten Wärmetauscher 65 verbunden. An dem zweiten Wärmetauscher 65 ist eine Lüftereinrichtung 70 vorgesehen. Die Lüftereinrichtung 70 umfasst einen Antriebsmotor 75 und einen Lüfterrotor 76. Der Antriebsmotor 75 ist ausgebildet, den Lüfterrotor 76 in Rotation zu versetzen. Der zweite Wärmetauscher 65 ist über eine fünfte Leitung 80 mit dem 2/4 Wegeventil 25 verbunden. Das 2/4 Wegeventil 25 ist über eine sechste Leitung 85 mit einem Flüssigkeitsabscheider 90 verbunden. Der Flüssigkeitsabscheider 90 ist über eine siebte Leitung 95 mit einer Eingangsseite 100 des Kompressors 15 verbunden.

Die in Figur 1 gezeigten ersten bis siebten Leitungen 20, 30 40, 60, 80, 85, 95 stellen eine Verbindung zwischen den einzelnen Komponenten des Wärmepumpenkreislaufs 10 bereit. Sie sind in Fig. 1 mit einer durchgezogenen Linie symbolisch dargestellt. In den Leitungen 20, 30, 40, 60, 80, 85, 95 ist ein erstes Medium 110 vorgesehen, das beispielsweise als Kühlflüssigkeit ausgebildet ist. Hierbei eignet sich beispielsweise für das erste Medium 110 Propan.

Der Kompressor 15 ist mit einer Steuereinrichtung 105 über eine erste Verbindung 106 verbunden. Die Steuereinrichtung 105 ist dabei ausgebildet, den Kompressor 15 je nach Leistungsanforderung mit elektrischer Leistung zu versorgen und den Kompressor 15 anzusteuern. Im Folgenden werden Verbindungen, die eine elektrische Verbindung zwischen einzelnen Komponenten des Wärmepumpenkreislaufs 10 bereitstellen, strichliert dargestellt, um eine bessere Unterscheidung zwischen den elektrischen Verbindungen und den fluidführenden Leitungen 20, 30, 40, 60, 80, 85, 95 zu ermöglichen.

Die Lüftereinrichtung 70 ist an dem zweiten Wärmetauscher 65 angeordnet. Die Lüftereinrichtung 70 im Betrieb fördert ein zweites Medium 115, vorzugsweise Luft, an den zweiten Wärmetauscher 65, so dass an dem zweiten Wärmetauscher 65 ein Wärmeaustausch zwischen dem ersten Medium 110 und dem zweiten Medium 115 erfolgt. Selbstverständlich kann die Lüftereinrichtung auch an einer anderen Position angeordnet sein, um das zweite Medium zum zweiten Wärmetauscher 65 zu fördern.

Im Wärmepumpenkreislauf 10 sind zahlreiche Sensoren zum Erfassen einer Temperatur oder eines Drucks des ersten oder des zweiten Mediums 110, 115 vorgesehen. Dabei ist ein erster Temperatursensor 120 und ein erster Drucksensor 125 an der sechsten Leitung 85 vorgesehen, um eine erste Temperatur bzw. einen ersten Druck des ersten Mediums 110 eingangsseitig vor dem Kompressor 15 in der sechsten Leitung 85 zu erfassen. Der erste Temperatursensor 120 ist dabei über eine zweite Verbindung 130 mit der Steuereinrichtung 105 verbunden. Der erste Drucksensor 125 ist über eine dritte Verbindung 140 mit der Steuereinrichtung 105 verbunden.

Ferner ist ein zweiter Temperatursensor 145 vorgesehen, der zwischen der Lüftereinrichtung 70 und dem zweiten Wärmetauscher 65, also stromaufwärtsseitig des zweiten Wärmetauschers angeordnet ist, um eine Temperatur des zweiten Mediums 115 zu erfassen. Selbstverständlich ist auch denkbar, dass der zweite Temperatursensor 145 linksseitig in Figur 1 vor der Lüftereinrichtung 70 angeordnet ist. Auch eine andere Anordnung ist denkbar. Wichtig dabei ist jedoch, dass der zweite Temperatursensor 145 die Temperatur des zweiten Mediums 115 vor Zuführung oder Abführung von Wärme durch den zweiten Wärmetauscher 65 erfasst. Der zweite Temperatursensor 145 ist über eine vierte Verbindung 150 mit der Steuereinrichtung 105 verbunden.

Ferner ist in dem zweiten Wärmetauscher 65 ein zweiter Drucksensor 155 vorgesehen. Der zweite Drucksensor 155 ist über eine fünfte Verbindung 160 mit der Steuereinrichtung 105 verbunden. Die Druck- und Temperatursensoren 120, 125, 145, 155 stellen ein zum Druck bzw. zur Temperatur korrelierendes Druck- bzw. Temperatursignal über die jeweiligen Verbindungen 130, 140, 150, 160 der Steuereinrichtung 105 bereit. Der Antriebsmotor 75 der Lüftereinrichtung 70 ist über eine sechste Verbindung 180 mit der Steuereinrichtung 105 verbunden. Die Steuereinrichtung 105 weist ferner einen Speicher 175 auf.

Der in Figur 1 gezeigte Wärmepumpenkreislauf 10 ist in Figur 1 im Betriebsmodus "Heizen" dargestellt. Dabei wird der erste Wärmetauscher 35 als Kondensator und der zweite Wärmetauscher 65 als Verdampfer betrieben. Dabei wird dem Kompressor 15 an seiner Eingangsseite 100 das erste Medium 110 zugeführt. Der Kompressor 15 verdichtet das erste Medium 110 und fördert es über die zweite bzw. dritte Leitung 20, 30 zum ersten Wärmetauscher 35. Das erste Medium 110 befindet sich nach dem Komprimieren vom Kompressor in einem überhitzten Gaszustand. In diesem Zustand wird das erste Medium 110 aus der zweiten Leitung 30 dem ersten Wärmetauscher 35 zugeführt. Im ersten Wärmetauscher 35 wird Wärme aus dem ersten Medium 110 an ein drittes Medium 181 abgegeben. Der erste Wärmetauscher 35 kann beispielsweise mit einem Heizkreislauf eines Gebäudes verbunden sein. Selbstverständlich ist auch denkbar, dass der erste Wärmetauscher 35 in einem Zimmer eines Gebäudes oder in einem Fahrgastinnenraum eines Kraftfahrzeugs angeordnet ist, um das Zimmer bzw. den Fahrgastinnenraum mittels des dritten Mediums 181 zu beheizen. Im ersten Wärmetauscher 35 wird das erste Medium 110 vom überhitzten Gaszustand in einen unterkühlten Flüssigkeitszustand überführt.

Über die dritte Leitung 40 wird das erste Medium 110 zu der ersten Drossel 45 geführt. Über die erste Drossel 45 wird eine Entspannung des ersten Mediums 110 in den Gas-Flüssigkeitsbehälter 55 gesteuert. Dabei weist das erste Medium 110 nach der ersten Drossel 45 einen geringeren Druck als vor der ersten Drossel 45 auf. Mittels der zweiten Drossel 50 wird ein Abfluss aus dem Gas-Flüssigkeitsbehälter 55 gesteuert.

Das erste Medium 110 fließt als unterkühlte Flüssigkeit in der vierten Leitung 60 in den zweiten Wärmetauscher 65. Im Heizbetrieb wird dem ersten Medium 110 Wärme aus dem zweiten Medium 115 zugeführt. Um eine besonders große Wärmezuführung zu erreichen, fördert die Lüftereinrichtung 70 das zweite Medium 115 an den zweiten Wärmetauscher 65. Durch die Zuführung der Wärme bleibt zwar der Druck des ersten Mediums 110 im zweiten Wärmetauscher 65 im Wesentlichen gleich, jedoch erhöht sich die Temperatur. Dabei wird im zweiten Wärmetauscher 65 das erste Medium 110 so weit erwärmt, dass das erste Medium 110 im zweiten Wärmetauscher 65 verdampft wird und den zweiten Wärmetauscher 65 im überhitzten Gaszustand über die fünfte Leitung 80 verlässt.

Über die fünfte Leitung 80 wird das erste Medium dem 2/4 Wegeventil 25 zugeführt und wird von dort aus in den Flüssigkeitsabscheider 90 über die sechste Leitung 85 geführt. Sollten sich noch einzelne Flüssigkeitstropfen in dem überhitzten Gas des ersten Mediums 110 befinden, werden diese im Flüssigkeitsabscheider 90 abgeschieden. Das überhitzte Gas des ersten Mediums 110 wird über die siebte Leitung 95 an die Eingangsseite 100 zur abermaligen Kompression durch den Kompressor 15 dem Kompressor 15 zugeführt, der dieses dann abermals komprimiert. Auf diese Weise ist der Wärmepumpenkreislauf 10 geschlossen.

Die Sensoren 120, 125, 155, 145 stellen der Steuereinrichtung 105 ein korrespondierendes Sensorsignal bereit. Die Steuereinrichtung 105 erfasst dabei ein erstes Temperatursignal des ersten Temperatursensors 120, das mit einer ersten Temperatur in der sechsten Leitung 85 des ersten Mediums 110 korrespondiert. Ferner erfasst die Steuereinrichtung 105 ein erstes Drucksignal des ersten Drucksensors 125, das mit einem ersten Druck des ersten Mediums 110 in der sechsten Leitung 85 korreliert. Die Steuereinrichtung 105 erfasst weiter ein zweites Temperatursignal des zweiten Temperatursensors 145, das mit einer zweiten Temperatur des zweiten Mediums 115 korreliert. Des Weiteren erfasst die Steuereinrichtung 105 ein zweites Drucksignal des zweiten Drucksensors 155, das mit dem Druck im zweiten Wärmetauscher 65 korreliert.

Die Steuereinrichtung 105 bildet eine Differenz aus der ersten Temperatur des ersten Mediums 110 in der sechsten Leitung 85 und der zweiten Temperatur des zweiten Mediums 115 am zweiten Wärmetauscher 65. Die Steuereinrichtung 105 steuert in Abhängigkeit der Differenz aus der ersten Temperatur und der zweiten Temperatur über die sechste Verbindung 180 den Antriebsmotor 75 der Lüftereinrichtung 70 an und regelt in Abhängigkeit der Differenz der ersten Temperatur und der zweiten Temperatur eine Förderleistung der Lüftereinrichtung. Dabei korreliert die Förderleistung mit einer Drehzahl des Lüfterrotors 76 bzw. des Antriebsmotors 76. Die Förderleistung korrespondiert aber auch mit einem Massenstrom des dem zweiten Wärmetauschers 65 zugeführten zweiten Mediums. Dadurch kann auf einfache Weise ein Wärmeaustausch am zweiten Wärmetauscher 65 zwischen dem zweiten Medium 115 und dem ersten Medium 110 gesteuert werden.

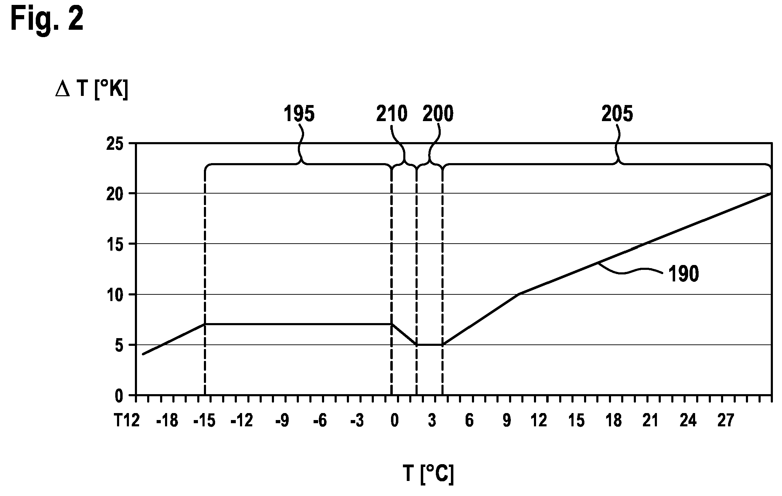

Figur 2 zeigt ein Diagramm eines Temperaturverlaufs 190, wobei auf der Abszisse die zweite Temperatur des zweiten Mediums 115 in Grad Celsius aufgetragen ist. Auf der Ordinate des Diagramms ist die Differenz aus der ersten Temperatur und der zweiten Temperatur aufgetragen. Der Verlauf des Diagramms ist in dem Speicher 175 der Steuereinrichtung 105 abgelegt. Die Steuereinrichtung 105 steuert dabei derart die Förderleistung der Lüftereinrichtung 70 an, dass sich bezogen auf die zweite Temperatur des zweiten Mediums 115 der in Figur 2 gezeigte Kurvenverlauf der Differenz der ersten Temperatur und der zweiten Temperatur aufgetragen über die zweite Temperatur einstellt.

Der in Figur 2 gezeigte Temperaturverlauf 190 weist einen ersten Temperaturbereich 195, einen zweiten Temperaturbereich 200 und einen dritten Temperaturbereich 205 auf. Ferner ist zwischen dem ersten und dem zweiten Temperaturbereich 195, 200 ein Übergangstemperaturbereich 210 vorgesehen.

Der erste Temperaturbereich 195 erstreckt sich im Wesentlichen von -15 °C bis etwa 0 °C. Der Übergangstemperaturbereich 210 erstreckt sich von etwa 0 °C bis 1,5 °C. Der zweite Temperaturbereich 200 erstreckt sich von 1,5 °C bis 4,5 °C. Der dritte Temperaturbereich 205 erstreckt sich von 4,5 °C bis weit über 30 °C. Selbstverständlich ist auch denkbar, dass die Temperaturbereiche 195, 200, 205, 210 andersartig gewählt sind. So ist insbesondere denkbar, dass der zweite Temperaturbereich 200 und der Übergangstemperaturbereich 200, 210 zusammengefasst sind. Dabei kann beispielsweise der Übergangstemperaturbereich 210 besonders schmal mit einem besonders steilen Abfall der Differenz aus der ersten Temperatur und der zweiten Temperatur ausgebildet sein. So ist denkbar, dass der zweite Temperaturbereich 200 sich von 0 °C bis 6 °C, vorzugsweise von 1 °C bis 5 °C, erstreckt.

Die Steuereinrichtung 105 erfasst kontinuierlich die von den Druck- und Temperatursensoren 120, 125, 145, 155 erfassten Drücke bzw. Temperaturen. Dabei steuert die Steuereinrichtung 105 die Lüftereinrichtung 70 in ihrer Förderleistung, insbesondere in ihrer Drehzahl derartig an, dass bei Erfassen eines zweiten Temperatursignals, das mit einer zweiten Temperatur korreliert, die im Bereich von -15° bis 0° liegt, sich eine Differenz zwischen der ersten und der zweiten Temperatur einstellt, die über dem ersten Temperaturbereich 195 im Wesentlichen konstant ist.

Besonders vorteilhaft ist hierbei, wenn sich in dem ersten Temperaturbereich 195 eine Differenz aus der ersten Temperatur und der zweiten Temperatur einstellt, die zwischen 5 °C und 10 °C, vorzugsweise zwischen 6 °C und 8 °C, besonders vorteilhafterweise 7 °C, einstellt. Dadurch kann bei niedrigen Temperaturen ein Vereisen des zweiten Wärmetauschers 65 vermieden werden.

Ferner steuert die Steuereinrichtung 105 die Lüftereinrichtung 70 in ihrer Förderleistung, insbesondere in ihrer Drehzahl derartig an, dass sich im zweiten Temperaturbereich 200 eine Differenz aus der ersten Temperatur und der zweiten Temperatur einstellt, die sich etwa bei 5 °C, also 2 °C geringer als im ersten Temperaturbereich 195, einstellt. Dabei ist auch im zweiten Temperaturbereich 200 wie im ersten Temperaturbereich 195 über die erste Temperatur die Differenz aus der ersten Temperatur und der zweiten Temperatur im Wesentlichen konstant.

Je nach im Speicher 175 abgelegter Breite des zweiten Temperaturbereichs 200 ist die Steuereinrichtung 105 ausgebildet, im Übergangsbereich 210 zwischen dem ersten Temperaturbereich 195 und dem zweiten Temperaturbereich 200 die Lüftereinrichtung 70 in ihrer Förderleistung derartig anzusteuern, dass die Differenz aus der ersten Temperatur und der zweiten Temperatur von dem ersten Temperaturbereich 195 hin zum zweiten Temperaturbereich 200 abfällt.

Im dritten Temperaturbereich 205 steuert die Steuereinrichtung 105 die Lüftereinrichtung 70 derartig an, dass sich ein Temperaturverlauf 190 über der Differenz der ersten Temperatur und der zweiten Temperatur über die erste Temperatur einstellt, dass der Temperaturverlauf 190 stetig steigt. Dadurch kann mit Zunehmen der zweiten Temperatur die Lüftereinrichtungsdrehzahl reduziert werden, so dass zum einen Lärmemissionen durch die Lüftereinrichtung 70 zur Förderung des zweiten Mediums 115 reduziert werden und zum anderen der Antriebsmotor 75 bei einer hohen Umgebungstemperatur, die der zweiten Temperatur entspricht, geschont wird.

Die Temperaturbereiche 195, 200, 205, 210 sind derartig gewählt, dass die Temperaturbereiche 195, 200, 205, 210 aneinander angrenzen. Somit liegt der zweite Temperaturbereich 200 oberhalb des ersten Temperaturbereichs 195 und des Übergangstemperaturbereichs 210. Der dritte Temperaturbereich 210 liegt oberhalb des zweiten und des ersten Temperaturbereichs 195, 200.

Um einen zuverlässigen und leisen Betrieb des Wärmepumpenkreislaufs 10, insbesondere der Lüftereinrichtung 70 zu gewährleisten, ist die Steuereinrichtung 105 ausgebildet, die Drehzahl der Lüftereinrichtung 70 über weite Bereiche eines Drehzahlspektrums stufenlos zu regeln.

Ferner ist in dem Speicher 175 ein erster Schwellenwert für einen zweiten Druck im zweiten Wärmetauscher 65 hinterlegt. Die Steuereinrichtung 105 erfasst kontinuierlich das zweite Drucksignal des zweiten Drucksensors 155 und vergleicht es mit dem im Speicher 175 abgelegten ersten Schwellenwert. Überschreitet das erste Drucksignal den ersten Schwellenwert, so aktiviert die Steuereinrichtung 105 die Lüftereinrichtung 70, sofern dieser deaktiviert war. Um ein kurzfristiges Ein- und Ausschalten und somit eine mögliche Zerstörung des Antriebsmotors 75 zu vermeiden, weist die Steuereinrichtung 105 eine Zeiterfassungseinrichtung 215 auf, die ausgebildet ist, ein Zeitintervall nach Aktivieren der Lüftereinrichtung 70 zu erfassen. Dabei ist die Steuereinrichtung 105 ausgebildet, die Lüftereinrichtung 70 auch bei Unterschreiten des ersten Schwellenwerts weiter zu betreiben, sofern das vordefinierte Zeitintervall, das beispielsweise in dem Speicher 175 abgelegt ist, noch nicht abgelaufen ist.

Die oben beschriebene Ansteuerung der Lüftereinrichtung 70 zur Erzielung des in Figur 2 gezeigten Temperaturverlaufs 190 bezieht sich auf eine konstante Kompressorleistung. Selbstverständlich ist auch denkbar, dass die Kompressorleistung durch die Steuereinrichtung 105 ebenso variiert wird. Die Steuereinrichtung 105 ist dabei ebenso ausgebildet, auch bei einer variierten Kompressorleistung den oben genannten Temperaturverlauf 190, wie in Figur 2 gezeigt, durch eine Regulierung der Förderleistung, insbesondere der Drehzahl, der Lüftereinrichtung 70 in Abhängigkeit der Differenz aus der ersten Temperatur und der zweiten Temperatur zu erzielen.

Die Steuereinrichtung 105 ist ferner ausgebildet, nach Deaktivierung des Kompressors 15 die Zeiterfassungseinrichtung 215 und die Lüftereinrichtung 70 zu aktivieren. Dabei lässt die Steuereinrichtung 105 die Lüftereinrichtung 70 solange unabhängig von den erfassten Temperaturen und Drücken aktiviert, bis die Zeiterfassungseinrichtung 215 den Ablauf eines vordefinierten und im Speicher 175 abgelegten Nachlaufintervalls, beispielsweise zwei Minuten nach Deaktivierung des Kompressors 100, signalisiert. Nach Ablauf des Nachlaufintervalls deaktiviert die Steuereinrichtung 105 die Lüftereinrichtung 70. Dadurch kann zum einen der Druck im Wärmepumpenkreislauf 10 ausgeglichen und zum anderen ein einfacher Enteisungseffekt am zweiten Wärmetauscher 65 im Heizbetrieb gewährleistet werden. Durch das Enteisen beispielsweise mit Umgebungsluft, kann der Energieaufwand zum Betrieb des Wärmepumpenkreislaufs 10 auf einfache Weise reduziert werden.

In der Ausführungsform ist die Steuereinrichtung 105 ausgebildet, die Lüftereinrichtung 70 erst einzuschalten, wenn eine durch die Steuereinrichtung 105 ermittelte Drehzahl zum Betrieb der Lüftereinrichtung 70 wenigstens 20 % einer Nominaldrehzahl der Lüftereinrichtung 70 entspricht. Ferner schaltet die Steuereinrichtung 105 die Lüftereinrichtung 70 erst dann ab, wenn eine ermittelte Drehzahl der Lüftereinrichtung 70 kleiner 11 % ist. Zur Schonung des Antriebsmotors 75 steuert die Steuereinrichtung 105 die Drehzahl der Lüftereinrichtung 70 nicht über 90 % der Nominaldrehzahl. Die Steuereinrichtung 105 kann dabei auch einen leisen Betriebsmodus aufweisen, bei dem die Steuereinrichtung 105 ausgebildet ist, die Drehzahl der Lüftereinrichtung 70 nicht über 70 % der Nominaldrehzahl der Lüftereinrichtung 70 zu steigern.

In der Ausführungsform ist die Steuereinrichtung 105 ausgebildet, bei einem Sensorausfall, beispielsweise zur Erfassung der ersten oder zweiten Temperatur oder des ersten oder zweiten Drucks, die Lüftereinrichtung 70 auf 50 % der Nominaldrehzahl anzusteuern, um eine Zerstörung des Wärmepumpenkreislaufs 10 zu vermeiden. Die Steuereinrichtung 105 steuert dabei die Lüftereinrichtung 70 nur dann an, wenn der Kompressor 15 aktiviert wurde und das zweite Zeitintervall nach Deaktivierung des Kompressors 15 noch nicht abgelaufen ist. Ist das zweite Zeitintervall von beispielsweise zwei Minuten bereits abgelaufen, so deaktiviert die Steuereinrichtung 105 ebenso die Lüftereinrichtung 70.

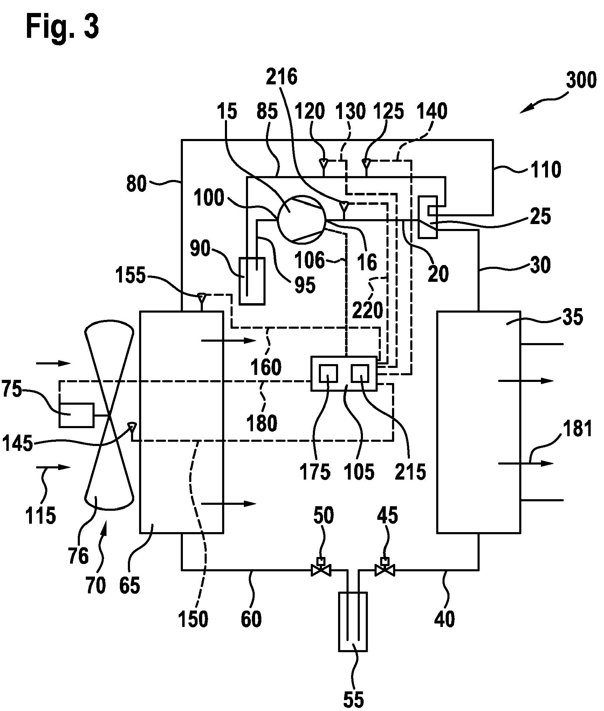

Figur 3 zeigt eine schematische Darstellung eines Wärmepumpenkreislaufs 300 gemäß einer zweiten Ausführungsform. Der Wärmepumpenkreislauf 300 ist im Wesentlichen identisch zu dem in Figur 1 gezeigten Wärmepumpenkreislauf 10 ausgebildet.

In Figur 3 wird der Wärmepumpenkreislauf 300 jedoch in gegenteiliger Richtung betrieben, so dass sich der Wärmepumpenkreislauf 300 im Betriebszustand "Kühlen" befindet. Die gegenteilige Betriebsrichtung wird durch eine zweite Schaltstellung des 2/4 Wegeventils 25 erzielt. Somit ist eine erste Leitung 20 über das 2/4 Wegeventil 25 mit der fünften Leitung 80 fluidisch verbunden. Ferner wird über das 2/4 Wegeventil die sechste Leitung 85 mit der zweiten Leitung 30 verbunden. Auf diese Weise dient der zweite Wärmetauscher 65 als Kondensator und der erste Wärmetauscher 35 als Verdampfer. Wird die Betriebsrichtung wie in Figur 3 gezeigt, gegenüber Figur 1 umgedreht, so wird über den ersten Wärmetauscher 35 das dritte Medium 181 nicht mehr wie in Figur 1 gezeigt, erwärmt, sondern abgekühlt.

Zusätzlich zu dem in Figur 1 gezeigten Wärmepumpenkreislauf 10 ist in dem in Figur 3 gezeigten Wärmepumpenkreislauf 300 an der ersten Leitung 20 zwischen der Ausgangsseite 16 des Kompressors 15 und dem 2/4 Wegeventil 25 ein dritter Temperatursensor 216 vorgesehen. Der dritte Temperatursensor 216 ist über eine achte Verbindung 220 mit der Steuereinrichtung 105 verbunden. Der dritte Temperatursensor 216 stellt ein drittes Temperatursignal bereit, das einer dritten Temperatur des ersten Mediums 110 in der ersten Leitung 20 entspricht. Die Steuereinrichtung 105 erfasst das dritte Temperatursignal des dritten Temperatursensors 216. Die Steuereinrichtung 105 ist dabei ausgebildet, die Förderleistung, insbesondere die Drehzahl, der Lüftereinrichtung 70 in Abhängigkeit des dritten Temperatursignals bzw. der dritten Temperatur des ersten Mediums 110 in der ersten Leitung 20 anzusteuern. Dies hat zur Folge, dass bei zunehmender dritter Temperatur in der ersten Leitung 20 die Drehzahl der Lüftereinrichtung 70 erhöht wird, um das erste Medium 110 im zweiten Wärmetauscher 65 abzukühlen.
Die Steuereinrichtung 105 ist dabei ausgebildet, die zu Figur 1 und 2 erläuterten Drehzahlbereiche von Minimaldrehzahl und Maximaldrehzahl für die Lüftereinrichtung 70 auch in diesem Betriebsmodus nicht zu überschreiten, um einen zuverlässigen und leisen Betrieb der Lüftereinrichtung 70 zu gewährleisten. Ferner ist die Steuereinrichtung 105 ausgebildet, bei Ausfall des dritten Temperatursensors 216 die Lüftereinrichtung 70 mit einer Drehzahl von 50 % der Nominaldrehzahl zu betreiben, um ein Überhitzen des ersten Mediums 110 im zweiten Wärmetauscher 65 zu vermeiden.

Im Speicher 175 der Steuereinrichtung 105 ist ein zweiter Schwellenwert abgelegt. Der zweite Schwellenwert entspricht dabei einem zweiten Druck im zweiten Wärmetauscher 65 bei Betrieb des Wärmepumpenkreislaufs 300 im Betriebsmodus "Kühlen". Die Steuereinrichtung 105 ist dabei ausgebildet, das zweite Drucksignal des zweiten Drucksensors 155 zu erfassen. Überschreitet das zweite Drucksignal den zweiten Schwellenwert, so aktiviert die Steuereinrichtung 105 die Lüftereinrichtung 70 und betreibt diesen zumindest mit der Minimaldrehzahl von beispielsweise 20 % über wenigstens einen Zeitraum von einer Minute. Alternativ ist auch denkbar, dass die Steuereinrichtung 105 die Lüftereinrichtung 70 mit einer anderen Drehzahl, insbesondere einer höheren Drehzahl gegebenenfalls über einen anderen Zeitraum ansteuert.

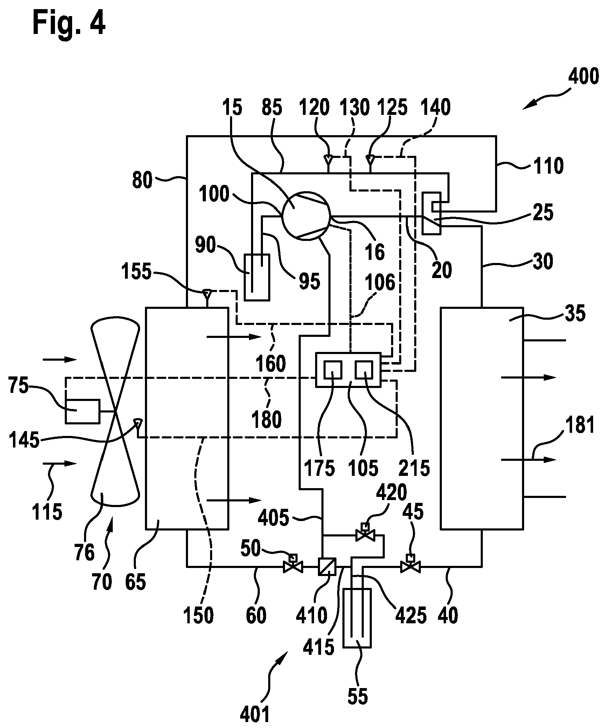

Figur 4 zeigt eine schematische Darstellung eines Wärmepumpenkreislaufs 400 gemäß einer dritten Ausführungsform. Der Wärmepumpenkreislauf 400 ist im Wesentlichen identisch zu dem in Figur 1 gezeigten Wärmepumpenkreislauf 10 ausgebildet. Zusätzlich ist in der in Figur 4 gezeigten Ausführungsform eine Nasseinspritzung 401 mit einer Vorrichtung 410 vorgesehen. Die Vorrichtung 410 ist über eine achte Leitung 405 mit dem Kompressor 15 verbunden. An der achten Leitung ist parallel zur Vorrichtung 410 eine dritte Drossel 420 angeschlossen. Die Vorrichtung 410 ist über eine neunte Leitung 415 mit der zweiten Drossel 50 verbunden. Die Vorrichtung 410 und die dritte Drossel 420 sind ferner über eine zehnte Leitung 425 mit dem Gas-Flüssigkeitsbehälter 55 fluidisch verbunden. Über die Nasseinspritzung 401 kann eine nasse Einspritzung in den Kompressor 15 bereitgestellt werden. Dabei wird über die achte Leitung 405 ein flüssiges erstes Medium 110 direkt an den Kompressor 15 geleitet. Die dritte Drossel 420 und die Vorrichtung 410 dienen dazu, einen Massenstrom des ersten Mediums 110 zur Einspritzung in den Kompressor 15 zu dosieren.

## Patentansprüche

1. Verfahren zur Steuerung einer Lüftereinrichtung (70) eines Kondensators (65) eines Wärmepumpenkreislaufs (10; 300; 400),
- aufweisend einen Kompressor (15), der ein erstes Medium (110) zu dem Kondensator (65) pumpt, und die Lüftereinrichtung (70), die ein zweites Medium (115) zur Umströmung des Kondensators (65) fördert,
- wobei eine Temperatur des ersten Medium (110) ausgangsseitig des Kompressors (15) zwischen Kompressor (15) und Kondensator (65) gemessen wird,
- wobei eine Förderleistung der Lüftereinrichtung (70) in Abhängigkeit der Temperatur des ersten Mediums (110) gesteuert wird,
- ein Druck des ersten Mediums (110) in dem Kondensator (65) überwacht wird,
- wobei der erfasste Druck mit einem vordefinierten Schwellenwert verglichen wird,
- wobei bei Überschreiten des erfassten Drucks im Kondensator (65) die Lüftereinrichtung (70) aktiviert wird.

2. Verfahren nach Anspruch 1, wobei bei Aktivierung der Lüftereinrichtung (70) die Lüftereinrichtung (70) mit einer Minimaldrehzahl, betrieben wird.

3. Verfahren nach Anspruch 2, wobei die Minimaldrehzahl 20 Prozent einer Nominaldrehzahl der Lüftereinrichtung (70) beträgt.

4. Verfahren nach Anspruch 2 oder 3, wobei die Lüftereinrichtung (70) für einen Zeitraum, vorzugsweise von wenigstens einer Minute, aktiviert wird.

5. Wärmepumpenkreislauf (10; 300; 400) mit einem Kompressor (15), einer Steuereinrichtung (105) und einem Kondensator (65), wobei der Kompressor (15) ein erstes Medium in den Kondensator (65) pumpt,
- wobei eine Lüftereinrichtung (70) vorgesehen ist, die ausgebildet ist, ein zweites Medium (115) für den Kondensator (65) zu fördern,
- wobei ein Temperatursensor (216) vorgesehen ist,
- wobei der Temperatursensor (216) eine Temperatur des ersten Mediums (110) zwischen dem Kondensator (65) und dem Kompressor (15) misst,
- wobei die Steuereinrichtung (105) eine Förderleistung der Lüftereinrichtung (70) in Abhängigkeit der gemessenen Temperatur steuert,
- wobei die Steuereinrichtung (105) einen Druck des ersten Mediums (110) in dem Kondensator (65) überwacht,
- wobei die Steuereinrichtung (105) den erfasste Druck mit einem vordefinierten Schwellenwert vergleicht,
- wobei die Steuereinrichtung (105) bei Überschreiten des vordefinieren Schwellenwerts durch den erfassten Drucks im Kondensator (65) die Lüftereinrichtung (70) aktiviert.

6. Wärmepumpenkreislauf (10; 300; 400) nach Anspruch 5, **dadurch gekennzeichnet, dass** das zweite Medium (115) Luft ist.

7. Wärmepumpenkreislauf (10; 300; 400) nach einem der Ansprüche 5 oder 6, **dadurch gekennzeichnet, dass** die Lüftereinrichtung (70) einen Antriebsmotor (75) und einen Lüfterrotor (76) umfasst, der mit dem Antriebsmotor (75) gekoppelt ist, wobei die Förderleitung der Lüftereinrichtung (70) über eine Drehzahl des Antriebsmotors (75) gesteuert wird.
